# EUROPEAN PATENT APPLICATION

(11) **EP 4 782 280 A1**
(43) Date of publication of application: **29.07.2026**
(21) Application number: 24876695.8
(22) Date of filing: 12.10.2024
(51) Int. Cl.: B60R 11/04, B60S 1/54, B60S 1/56, B60J 1/02

(54) **OPTICAL ELEMENT SUPPORT ASSEMBLY FOR WINDSHIELD, WINDSHIELD ASSEMBLY, AND VEHICLE**

(30) Priority: 12.10.2023 CN 202311320178
(71) Applicant: Fuyao Glass Industry Group Co., Ltd., Fuqing, Fujian 350300 (CN)
(72) Inventor: LIU, Chunxin, Fuzhou, Fujian 350300 (CN); CHEN, An, Fuzhou, Fujian 350300 (CN)
(74) Representative: Gill Jennings & Every LLP
(86) International application number: PCT/CN2024/124492
(87) International publication number: WO 2025/077890

(57) **Abstract**

The present application relates to an optical element support assembly for a windshield, a windshield assembly, and a vehicle. The optical element support assembly comprises a support (10), an optical element (20), an air-blowing mechanism (30), and a heating mechanism (40). When the air-blowing mechanism (30) is in operation, air from the air-blowing mechanism (30) is blown downwards from above a field-of-view area towards the field-of-view area and has a defrosting and defogging effect on the field-of-view area, while the heating mechanism (40) can heat the air from the air-blowing mechanism (30) so as to improve the defrosting and defogging efficiency. Because the air from the air-blowing mechanism (30) is blown downwards towards the field-of-view area, the air is not in contact with the lens of the optical element (20), thereby avoiding a defect which causes water vapor to blur the lens. In addition, because there is no need to provide a ventilation opening in the field-of-view area, there is no cause for defects such as light leakage and stray-light reflection, and the performance of the optical element (20) is not affected.

## Description

### CROSS-REFERENCE TO RELATED APPLICATIONS

This application claims priority to Chinese Patent Application No. 202311320178X, filed on October 12, 2023, entitled "OPTICAL ELEMENT BRACKET ASSEMBLY FOR WINDSHIELD, WINDSHIELD ASSEMBLY, AND VEHICLE", the entire content of which is incorporated herein by reference in its entirety.

### TECHNICAL FIELD

The present application relates to the field of glass technology, and in particular to an optical element bracket assembly for a windshield, a windshield assembly, and a vehicle.

### BACKGROUND

With the rapid development of the vehicle industry, the application of safety systems based on cameras is growing rapidly. Such systems, especially Advanced Driver Assistance Systems (ADAS) using cameras as the main sensors and control modules as the core, require a wide field of view and a high level of optical clarity. However, when the air humidity increases, especially during the transition from autumn to winter, a layer of frost often forms on the vehicle window glass. The frost on the vehicle window glass will seriously obstruct the field of view region (also referred to as the FOV region) of the camera.

In the related art, in order to remove frost and fog from the vehicle window glass, heating wires are generally printed on the surface of the vehicle window glass, heating filaments such as tungsten filaments are arranged, heating modules are adhered to the bottom of the camera bracket, or a fan is provided to blow hot air from bottom to top, to remove frost and fog in the field of view region.

However, when heating filaments or heating wires are provided on the vehicle window glass, the efficiency of defogging and defrosting is low and still cannot meet the requirements, and it is easy to cause diffraction defects in the light of the camera. In addition, when hot air from the fan blows from bottom to top to act on the surface of the vehicle window glass, water vapor is blown upwards at the same time. When the water vapor is in contact with the lens of the camera, it can easily cause the lens to blur. Furthermore, due to the hollowed-out air vent, there are defects of light leakage and stray light reflection.

### SUMMARY

According to various embodiments of the present application, an optical element bracket assembly for a windshield, a windshield assembly, and a vehicle are provided.

An optical element bracket assembly for a windshield includes:
a bracket configured to be fixed to an inner surface of the windshield;
an optical element fixed to the inner surface of the windshield through the bracket;
an air blowing mechanism connected to the bracket, air from the air blowing mechanism blowing toward a field of view region of the optical element, the air blowing mechanism being located above the field of view region; and
a heating mechanism connected to the air blowing mechanism, the heating mechanism being configured to heat incoming air and/or outgoing air of the air blowing mechanism.

In one embodiment, the air blowing mechanism is arranged in a region outside the field of view region on the windshield.

In one embodiment, air from the air blowing mechanism blows from an upper side of the field of view region from top to bottom toward the field of view region.

In one embodiment, a region on the inner surface of the windshield toward which the air from the air blowing mechanism blows completely covers the field of view region.

In one embodiment, an area of a region on the inner surface of the windshield toward which the air from the air blowing mechanism blows is defined as S1, an area of the field of view region is defined as S2, and S1≥4/3S2.

In one embodiment, the bracket is provided with at least one support portion, connected to the optical element, such that a spacing space is formed between the optical element and the bracket, and the air blowing mechanism is provided in the spacing space.

In one embodiment, a height of the support portion gradually decreases along a length direction of the optical element.

In one embodiment, the optical element bracket assembly for the windshield further includes a vibration damping component provided between the air blowing mechanism and the bracket.

In one embodiment, the vibration damping component includes a vibration damping pad, and a thickness of the vibration damping pad is less than or equal to 0.5 mm.

In one embodiment, a sound insulation component is provided on an outer side of the air blowing mechanism.

In one embodiment, the heating mechanism includes at least one electric heating wire, electric heating rod, at least one electric heating tube, at least one electric heating sheet or at least one LED lamp provided on the air blowing mechanism.

In one embodiment, the optical element bracket assembly for the windshield further includes a protective cover at least covering outside of the bracket, the optical element, the air blowing mechanism and the field of view region.

In one embodiment, the optical element bracket assembly for the windshield further includes a controller and an ambient temperature sensor, the ambient temperature sensor is configured to acquire an ambient temperature outside a vehicle, the controller is electrically connected to the ambient temperature sensor, the air blowing mechanism, the heating mechanism, and the optical element, respectively; the controller is configured to control operation of the air blowing mechanism and/or the heating mechanism according to the ambient temperature.

In one embodiment, the optical element includes an optical signal receiving terminal and a light shielding structure, the optical signal receiving terminal is configured to receive optical signals within the field of view region, the light shielding structure covers the field of view region and is capable of forming a cavity with the windshield, and the air blowing mechanism is configured to blow air from an upper side of the field of view region toward the field of view region located within the cavity.

In one embodiment, an operating noise of the air blowing mechanism is less than or equal to 45 decibels.

In one embodiment, the air blowing mechanism is an electric fan, and a frequency range of the electric fan is 1000 Hz to 10000 Hz.

In one embodiment, the air blowing mechanism is located on a side of the optical element facing the inner surface of the windshield; or, the air blowing mechanism is arranged on a side of the optical element away from the windshield.

A windshield assembly includes the optical element bracket assembly for a windshield and the windshield, the optical element bracket assembly for the windshield is provided on an inner surface of the windshield, the windshield has a signal transmission region, and the field of view region is located within the signal transmission region.

In one embodiment, the windshield is provided with a black edge region, the black edge region is provided with a light blocking layer, the black edge region is provided with an avoidance region, the light blocking layer is not provided in the avoidance region, and the field of view region is correspondingly provided within the avoidance region.

In one embodiment, a vehicle includes the windshield assembly.

The details of one or more embodiments of the application are set forth in the accompanying drawings and the description below. Other features, objectives, and advantages of the application will be apparent from the description and drawings, and from the claims.

### BRIEF DESCRIPTION OF THE DRAWINGS

FIG. 1 is an exploded view of a windshield assembly according to an embodiment of the present application.
FIG. 2 is a cross-sectional view of a windshield assembly according to an embodiment of the present application.
FIG. 3 is a noise variation curve diagram of a fan operating at different frequencies according to an embodiment of the present application.

10. Bracket; 11. Support portion; 12. Spacing space; 20. Optical element; 21. Optical signal receiving terminal; 22. Light shielding structure; 30. Air blowing mechanism; 40. Heating mechanism; 50. Windshield; 51. Avoidance; 60. Vibration damping component; 70. Sound insulation component; 80. Protective cover; 90. Connector.

### DETAILED DESCRIPTION OF THE EMBODIMENTS

In order to make the above objectives, features and advantages of the present application clear and easier to understand, the specific embodiments of the present application are described in detail below in combination with the accompanying drawings. Many specific details are set forth in the following description to facilitate a full understanding of the present application. However, the present application can be implemented in many ways different from those described herein, and those skilled in the art can make similar improvements without departing from the connotation of the present application. Therefore, the present application is not limited by the specific embodiments disclosed below.

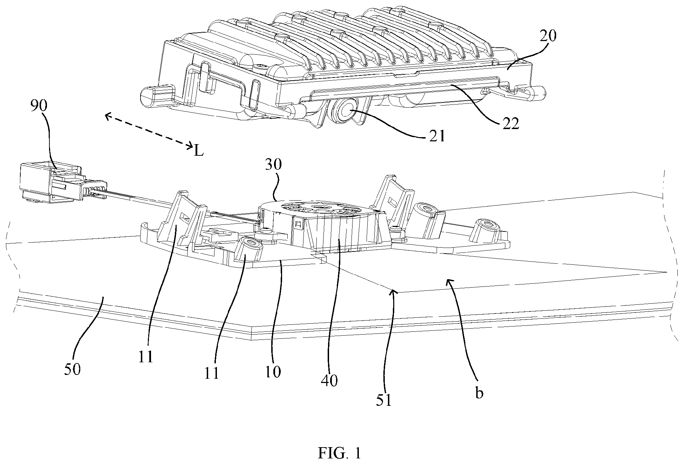

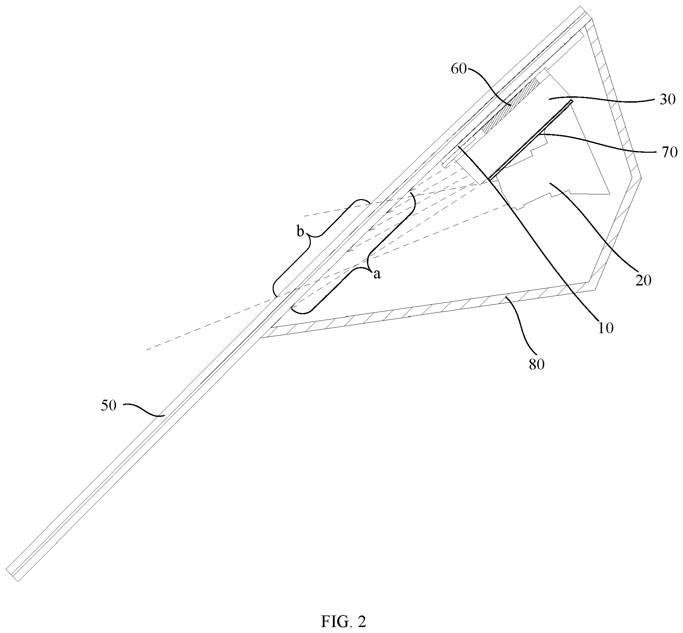

Referring to FIGS. 1 and 2, FIG. 1 shows an exploded view of a windshield assembly according to an embodiment of the present application, and FIG. 2 shows a cross-sectional view of a windshield assembly according to an embodiment of the present application. An optical element bracket assembly for a windshield provided by an embodiment of the present application includes a bracket 10, an optical element 20, an air blowing mechanism 30, and a heating mechanism 40. The bracket 10 is configured to be fixed to an inner surface of a windshield 50. The optical element 20 is configured to be fixed to the inner surface of the windshield 50 through the bracket 10. The optical element 20 includes, but is not limited to, a camera, a video camera, an ADAS camera, a LIDAR or other optical sensors. The air blowing mechanism 30 is connected to the bracket 10. The air from the air blowing mechanism 30 blows toward the field of view region (as shown by b in FIG. 2) of the optical element 20. The air blowing mechanism 30 is located above the field of view region. The heating mechanism 40 is connected to the air blowing mechanism 30, and is configured to heat the incoming air and/or outgoing air of the air blowing mechanism 30.

In the aforementioned optical element bracket assembly for the windshield, when the air blowing mechanism 30 is in operation, the air from the air blowing mechanism 30 blows from an upper side of the field of view region toward the field of view region from top to bottom, which plays a role in defrosting and defogging the field of view region. At the same time, the heating mechanism 40 can heat the air from the air blowing mechanism 30 to improve the efficiency of defrosting and defogging. In addition, since the air blowing mechanism 30 blows the air to the field of view region from top to bottom, it will not come into contact with the lens of the optical element 20, thus avoiding the defect of lens blurring caused by water vapor. Furthermore, since there is no need to provide an air vent in the field of view region, there will be no defects such as light leakage and stray light reflection, and the performance of the optical element 20 will not be affected.

It should be noted that the air blowing mechanism 30 is located above the field of view region, which refers to a positional relationship between the air blowing mechanism 30 and the field of view region after the optical element bracket assembly for the windshield is mounted on the windshield 50 of a vehicle and the vehicle is normally placed on the ground.

It should also be noted that the air from the air blowing mechanism 30 blows toward the field of view region from top to bottom, which does not mean that a direction of the air from the air blowing mechanism 30 is a precisely vertical direction, but only requires that the air from the air blowing mechanism 30 can blow toward the field of view region. For example, the air from the air blowing mechanism 30 is arranged at an angle to the vertical direction, that is, the air from the air blowing mechanism blows toward the field of view region in a direction at an acute angle to the vertical direction.

Referring to FIGS. 1 and 2, in some embodiments, the windshield 50 includes, but is not limited to, a front windshield, a rear windshield, left and right vehicle windows, corner windows, etc. In this embodiment, the windshield 50 is taken as a front windshield for illustration, but it is not limited hereto.

Referring to FIGS. 1 and 2, in some embodiments, the air blowing mechanism 30 is arranged in a region outside the field of view region on the windshield 50. In this way, the air blowing mechanism 30 can avoid the light of the optical element 20 acting on the field of view region, and will not interfere with the light of the optical element 20 acting on the field of view region, so that the optical element 20 can operate normally without being affected.

In some embodiments, the air blowing mechanism 30 includes, but is not limited to, a fan or a compressed air source and other mechanisms that can provide hot air, which can be flexibly selected according to actual needs and is not limited herein. In this embodiment, the air blowing mechanism 30 is specifically, for example, an electric fan or a blower.

Referring to FIGS. 1 and 2, in one embodiment, a region (as shown by a in FIG. 2) on the inner surface of the windshield 50 toward which the air from the air blowing mechanism 30 blows completely covers the field of view region (as shown by b in FIG. 2). Furthermore, an area of the region on the inner surface of the windshield 50 toward which the air from the air blowing mechanism 30 blows is defined as S₁, an area of the field of view region is defined as S₂, and S₁≥4/3S₂. In this way, the region a on the inner surface of the windshield 50 to which the air from the air blowing mechanism 30 blows completely covers the field of view region b, so that all positions of the field of view region can be defrosted and defogged, thus ensuring the performance of the optical element 20.

Referring to FIGS. 1 and 2, in one embodiment, the air blowing mechanism 30 is located on a side of the optical element 20 facing the inner surface of the windshield 50. In this way, when the air blowing mechanism 30 blows air, it can directly blow the air to the field of view region for defogging and defrosting, resulting in good defogging and defrosting effects.

Certainly, as some optional solutions, the air blowing mechanism 30 can also be arranged on a side of the optical element 20 away from the windshield 50, which can also achieve blowing air to the field of view region for defogging and defrosting.

Referring to FIGS. 1 and 2, in one embodiment, the bracket 10 is provided with at least one support portion 11 connected to the optical element 20, such that a spacing space 12 is formed between the optical element 20 and the bracket 10, and the air blowing mechanism 30 is provided in the spacing space 12.

Specifically, at least two support portions 11 are respectively provided on opposite sides of the bracket 10. Taking the inner surface of the bracket 10 as a reference surface, the heights of all support portions 11 on each side of the bracket 10 gradually decrease from top to bottom of the windshield 50 and along a length direction of the optical element 20 (as shown by L in FIG. 1). In this way, the optical element 20 connected to the support portion 11 can be arranged at an acute angle with the inner surface of the windshield 50, so that an optical signal receiving terminal 21 of the optical element 20 faces the field of view region.

It should be noted that the support portion 11 can be a part of the bracket 10, that is, the support portion 11 and other parts of the bracket 10 are integrally formed, or the support portion 11 can be an independent component separable from other parts of the bracket 10, that is, the support portion 11 can be manufactured independently and then combined with other parts of the bracket 10 to form a whole.

In one embodiment, the optical element 20 is connected to the support portion 11 by, including but is not limited to, snap-fit, bonding, welding, or fasteners such as pins, rivets, screws, bolts, etc.

In one embodiment, the air blowing mechanism 30 is connected to the bracket 10 by, including but is not limited to, snap-fit, bonding, welding, or fasteners such as pins, rivets, screws, bolts, etc.

Referring to FIGS. 1 and 2, in one embodiment, the optical element bracket assembly for the windshield further includes a vibration damping component 60 provided between the air blowing mechanism 30 and the bracket 10. In this way, the vibration damping component 60 plays a vibration damping role on the air blowing mechanism 30, thereby reducing vibration noise and reducing wear caused by vibration.

Referring to FIGS. 1 and 2, in one embodiment, the vibration damping component 60 includes, but is not limited to, a vibration damping pad. When the vibration damping component 60 is a vibration damping pad, a thickness of the vibration damping pad is, for example, less than or equal to 0.5 mm, specifically 0.4 mm, 0.3 mm, 0.2 mm, etc. In this way, the overall volume and size of the optical element bracket assembly can be reduced.

Certainly, as some optional solutions, the thickness of the vibration damping pad can also be any value greater than 0.5 mm, which can be flexibly adjusted and set according to actual needs.

In some embodiments, the material of the vibration damping pad includes, but is not limited to, natural rubber (NR), styrene-butadiene rubber (SBR), butadiene rubber (BR), nitrile-butadiene rubber (NBR), chloroprene rubber (CR), ethylene propylene diene monomer (EPDM), isoprene rubber (IR), etc., and may also be other recoverable cushioning materials, which can be flexibly adjusted and set according to actual needs and is not limited herein.

Referring to FIGS. 1 and 2, in one embodiment, a sound insulation component 70 is provided on an outer side of the air blowing mechanism 30.

Specifically, the air blowing mechanism 30 is an electric fan. Optionally, the sound insulation component 70 is provided at a sound outlet of a blower of the electric fan. In this way, the sound outlet of the blower is blocked by the sound insulation component 70, so that the noise generated during the operation of a motor can be prevented from being transmitted outward.

Specifically, the sound insulation component 70 is located between the air blowing mechanism 30 and the optical element 20.

Referring to FIG. 2, in one embodiment, the sound insulation component 70 includes, but is not limited to, a sound insulation cotton, and a thickness of the sound insulation cotton is 0.3 mm to 0.7 mm, specifically 0.3 mm, 0.4 mm, 0.5 mm, 0.6 mm, 0.7 mm and other values. In this way, the thickness of the sound insulation cotton is sufficient to achieve a good sound insulation effect, while the thickness of the sound insulation cotton is not too thick to cause an increase in the overall volume and size.

The sound insulation cotton includes, but is not limited to, polyester fiber sound insulation cotton, high-density egg cotton, glass fiber sound insulation cotton, gradient cotton, rock wool, etc., and can also be other materials that can absorb sound waves, which can be flexibly adjusted and selected according to actual needs.

In one embodiment, the heating mechanism 40 includes at least one electric heating wire, at least one electric heating rod, at least one electric heating tube, at least one electric heating sheet or at least one LED lamp provided on the air blowing mechanism 30.

Specifically, in this embodiment, the heating mechanism 40 is specifically configured as, for example, a plurality of electric heating wires at an air outlet of the air blowing mechanism 30. The electric heating wires are sequentially spaced apart.

Referring to FIG. 2, in one embodiment, the optical element bracket assembly for the windshield further includes a protective cover 80 configured to be connected to the inner surface of the windshield 50. The protective cover 80 covers the outside of the bracket 10, the optical element 20, the air blowing mechanism 30 and the field of view region.

Referring to FIG. 1, in one embodiment, the optical element bracket assembly for the windshield further includes a connector 90. The connector 90 is electrically connected to the air blowing mechanism 30, the electric heating mechanism 40, and the optical element 20, respectively. The connector 90 is further configured to be electrically connected to a power source. By connecting to the power source via the connector 90, power can be supplied to the air blowing mechanism 30, the electric heating mechanism 40, and the optical element 20.

In one embodiment, the optical element bracket assembly for the windshield further includes a controller and an ambient temperature sensor. The ambient temperature sensor is configured to acquire an ambient temperature outside the vehicle. The controller is electrically connected to the ambient temperature sensor, the air blowing mechanism 30, the heating mechanism 40, and the optical element 20, respectively. The controller is configured to control the operation of the air blowing mechanism 30 and/or the heating mechanism 40 according to the ambient temperature. In this way, based on the ambient temperature sensed by the ambient temperature sensor, the controller accordingly controls the air blowing mechanism 30 and the heating mechanism 40 to work flexibly, achieving better control over defogging and defrosting.

The temperature in summer is higher than that in winter. In summer, the controller controls the heating mechanism 40 not to be activated, and only controls the air blowing mechanism 30 to work to achieve the defogging function. In winter, the controller controls the heating mechanism 40 and the air blowing mechanism 30 to work synchronously, using hot air to perform defogging and defrosting operations on the field of view region to ensure the efficiency of defogging and defrosting.

In some embodiments, when the ambient temperature is in a first preset range, the controller controls the air blowing mechanism 30 to work and the heating mechanism 40 to stop working, that is, cold air is used to perform defogging operation on the field of view region. When the ambient temperature is in a second preset range, the controller controls the air blowing mechanism 30 and the heating mechanism 40 to work synchronously, and hot air is used to perform defogging and defrosting operations on the field of view region to ensure the efficiency of defogging and defrosting. The second preset range is lower than the first preset range. As an example, the first preset range is, for example, less than 5°C, and the second preset range is, for example, greater than 5°C.

In one embodiment, the optical element bracket assembly for the windshield further includes a controller. The controller is electrically connected to the air blowing mechanism 30, the heating mechanism 40, and the optical element 20, respectively. The controller is configured to control an air outlet speed of the air blowing mechanism 30 and/or control an operating power of the heating mechanism 40. In this way, by adjusting and controlling the air outlet speed of the air blowing mechanism 30 and/or the operating power of the heating mechanism 40 through the controller, rapid defogging and defrosting of the field of view region can be achieved.

In some embodiments, when the vehicle is, for example, in a starting stage or when the ambient temperature drops suddenly, there is a large amount of fog and frost in the field of view region of the windshield 50. The controller accordingly controls to increase the air outlet speed of the air blowing mechanism 30 and increase the operating power of the heating mechanism 40, so that rapid defogging and defrosting of the field of view region can be achieved. When the vehicle is, for example, in a normal operation stage or when the ambient temperature is in a third preset range, there is little or no fog and frost on the field of view region of the windshield 50. The controller accordingly controls the air blowing mechanism 30 to operate at a lower speed and controls the heating mechanism 40 to operate at a lower operating power, thereby saving energy and reducing noise.

In some embodiments, the controller is provided with, for example, a touch screen or a touch switch, through which the air output speed of the air blowing mechanism 30 and the operating power of the heating mechanism 40 can be flexibly adjusted and controlled separately.

In some embodiments, the optical element 20 includes an optical signal receiving terminal 21 and a light shielding structure 22. The optical signal receiving terminal 21 is configured to receive optical signals within the field of view region, the light shielding structure 22 covers the field of view region and can form a cavity with the windshield 50, and the air blowing mechanism 30 is configured to blow air from the upper side of the field of view region toward the field of view region located within the cavity.

In some embodiments, the operating noise of the air blowing mechanism 30 is less than or equal to 45 decibels.

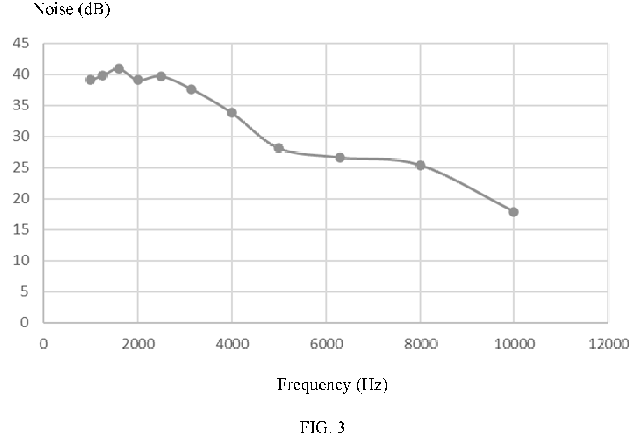

Referring to FIG. 3, which shows a noise variation curve diagram of a fan operating at different frequencies according to an embodiment of the present application. In one embodiment, the air blowing mechanism 30 is an electric fan, and a frequency range of the electric fan can be 1000 Hz to 10000 Hz. FIG. 3 is drawn based on the noise of the electric fan at different frequencies in the table below. From FIG. 3 and the table below, it can be seen that when the electric fan operates at frequencies in this range, the noise generated is less than 41 dB through the research, which meets requirements.

The table of the noise of the electric fan operating at different frequencies is as follows:

| | | | | | | |
|---|---|---|---|---|---|---|
| Frequency (Hz) | 1000 | 1250 | 1600 | 2000 | 2500 | 3150 |
| Noise Value (dB-A) | 39.1 | 39.8 | 40.9 | 39.1 | 39.7 | 37.6 |
| Frequency (Hz) | 4000 | 5000 | 6000 | 8000 | 10000 | |
| Noise Value (dB-A) | 33.8 | 28.1 | 26.6 | 25.4 | 17.9 | |

Referring to FIGS. 1 and 2, in one embodiment, a windshield assembly, including the optical element bracket assembly for the windshield according to any one of the above embodiments, further includes a windshield 50. The optical element bracket assembly for the windshield is provided on the inner surface of the windshield 50. The windshield 50 has a signal transmission region, and the field of view region is located within the signal transmission region.

In the aforementioned windshield assembly, when the air blowing mechanism 30 is in operation, the air blowing mechanism 30 blows the air from the upper side of the field of view region to the field of view region from top to bottom, which plays a role in defrosting and defogging the field of view region. At the same time, the heating mechanism 40 can heat the air from the air blowing mechanism 30 to improve the efficiency of defrosting and defogging. In addition, since the air blowing mechanism 30 blows the air to the field of view region from top to bottom, it will not come into contact with the lens of the optical element 20, thus avoiding the defect of lens blurring caused by water vapor. Furthermore, since there is no need to provide an air vent in the field of view region, there will be no defects such as light leakage and stray light reflection, and the performance of the optical element 20 will not be affected.

Referring to FIG. 1, in one embodiment, the windshield 50 is configured as, for example, a laminated glass. The windshield 50 is provided with a black edge region, the black edge region is provided with a light blocking layer, including but not limited to a printed ink layer, which can block light and serve as a shield. In addition, the black edge region is provided with an avoidance region 51, the light blocking layer is not provided in the avoidance region 51, and the field of view region is correspondingly provided within the avoidance region 51.

Referring to FIGS. 1 and 2, in one embodiment, a vehicle includes the windshield assembly according to any one of the aforementioned embodiments.

In the aforementioned vehicle, when the air blowing mechanism 30 is in operation, the air blowing mechanism 30 blows the air from the upper side of the field of view region to the field of view region from top to bottom, which plays a role in defrosting and defogging the field of view region. At the same time, the heating mechanism 40 can heat the air from the air blowing mechanism 30 to improve the efficiency of defrosting and defogging. In addition, since the air blowing mechanism 30 blows the air to the field of view region from top to bottom, it will not come into contact with the lens of the optical element 20, thus avoiding the defect of lens blurring caused by water vapor. Furthermore, since there is no need to provide an air vent in the field of view region, there will be no defects such as light leakage and stray light reflection, and the performance of the optical element 20 will not be affected.

In the present application, unless otherwise expressly specified and limited, the terms "mount", "connect", "couple", "fix" and the like should be interpreted broadly. For example, the terms can mean fixed connection, detachable connection, or being integrated. The terms can mean mechanical connection or electrical connection. The terms can mean directly connection or indirectly connection through an intermediate medium. The terms can mean connection within two elements or interaction relationship between two elements, unless otherwise expressly limited. For those skilled in the art, the specific meaning of the above terms in the present application should be understood according to the specific situation.

In the present application, unless otherwise expressly specified and limited, a first feature "above" or "below" a second feature may be in direct contact with the second feature, or the first and second features may be in indirect contact through an intermediate medium. Moreover, the first feature "above" the second feature may be right above or obliquely above the second feature, or the first feature may be merely located at a height higher than the second feature. The first feature "below" the second feature may be right below or obliquely below the second feature, or the first feature may be merely located at a height lower than that of the second feature.

The above-mentioned embodiments do not constitute a limitation on the protection scope of the technical solution. Any modifications, equivalent replacements and improvements made within the spirit and principles of the above-mentioned embodiments shall be included within the protection scope of this technical solution.

The foregoing descriptions are merely specific embodiments of the present application, but are not intended to limit the protection scope of the present application. Any variation or replacement readily figured out by a person skilled in the art within the technical scope disclosed in the present application shall all fall within the protection scope of the present application. Therefore, the protection scope of the present application shall be subject to the protection scope of the appended claims.

## Claims

1. An optical element bracket assembly for a windshield, comprising:
a bracket configured to be fixed to an inner surface of the windshield;
an optical element fixed to the inner surface of the windshield through the bracket;
an air blowing mechanism connected to the bracket, air from the air blowing mechanism blowing toward a field of view region of the optical element, the air blowing mechanism being located above the field of view region; and
a heating mechanism connected to the air blowing mechanism, the heating mechanism being configured to heat incoming air and/or outgoing air of the air blowing mechanism.

2. The optical element bracket assembly for the windshield according to claim 1, wherein the air blowing mechanism is arranged in a region outside the field of view region on the windshield.

3. The optical element bracket assembly for the windshield according to any one of claims 1 to 2, wherein the air from the air blowing mechanism blows from an upper side of the field of view region from top to bottom toward the field of view region.

4. The optical element bracket assembly for the windshield according to any one of claims 1 to 3, wherein a region on the inner surface of the windshield toward which the air from the air blowing mechanism blows completely covers the field of view region.

5. The optical element bracket assembly for the windshield according to any one of claims 1 to 4, wherein an area of a region on the inner surface of the windshield toward which the air from the air blowing mechanism blows is defined as as S₁, an area of the field of view region is defined as S₂, and S₁≥4/3S₂.

6. The optical element bracket assembly for the windshield according to any one of claims 1 to 5, wherein the bracket is provided with at least one support portion connected to the optical element,such that a spacing space is formed between the optical element and the bracket, and the air blowing mechanism is provided in the spacing space.

7. The optical element bracket assembly for the windshield according to claim 6, wherein a height of the support portion gradually decreases along a length direction of the optical element.

8. The optical element bracket assembly for the windshield according to any one of claims 1 to 7, further comprising a vibration damping component provided between the air blowing mechanism and the bracket.

9. The optical element bracket assembly for the windshield according to claim 8, wherein the vibration damping component comprises a vibration damping pad, and a thickness of the vibration damping pad is less than or equal to 0.5 mm.

10. The optical element bracket assembly for the windshield according to any one of claims 1 to 9, wherein a sound insulation component is provided on an outer side of the air blowing mechanism.

11. The optical element bracket assembly for the windshield according to any one of claims 1 to 10, wherein the heating mechanism comprises at least one electric heating wire, at least one electric heating rod, at least one electric heating tube, at least one electric heating sheet or at least one LED lamp provided on the air blowing mechanism

12. The optical element bracket assembly for the windshield according to any one of claims 1 to 11, further comprising a protective cover at least covering outside of the bracket, the optical element, the air blowing mechanism, and the field of view region.

13. The optical element bracket assembly for the windshield according to any one of claims 1 to 12, further comprising a controller and an ambient temperature sensor, wherein the ambient temperature sensor is configured to acquire an ambient temperature outside a vehicle, the controller is electrically connected to the ambient temperature sensor, the air blowing mechanism, the heating mechanism, and the optical element, respectively; the controller is configured to control operation of the air blowing mechanism and/or the heating mechanism according to the ambient temperature.

14. The optical element bracket assembly for the windshield according to any one of claims 1 to 13, wherein the optical element comprises an optical signal receiving terminal and a light shielding structure, the optical signal receiving terminal is configured to receive optical signals within the field of view region, the light shielding structure covers the field of view region and is capable of forming a cavity with the windshield, and the air blowing mechanism is configured to blow air from an upper side of the field of view region toward the field of view region located within the cavity.

15. The optical element bracket assembly for the windshield according to any one of claims 1 to 14, wherein an operating noise of the air blowing mechanism is less than or equal to 45 decibels.

16. The optical element bracket assembly for the windshield according to any one of claims 1 to 15, wherein the air blowing mechanism is an electric fan, and a frequency range of the electric fan is 1000 Hz to 10000 Hz.

17. The optical element bracket assembly for the windshield according to any one of claims 1 to 16, wherein the air blowing mechanism is located on a side of the optical element facing the inner surface of the windshield;
or, the air blowing mechanism is arranged on a side of the optical element away from the windshield.

18. A windshield assembly, comprising the optical element bracket assembly for a windshield according to any one of claims 1 to 17 and the windshield, the optical element bracket assembly for the windshield being provided on an inner surface of the windshield, the windshield having a signal transmission region, and the field of view region being located within the signal transmission region.

19. The windshield assembly according to claim 18, wherein the windshield is provided with a black edge region, the black edge region is provided with a light blocking layer, the black edge region is provided with an avoidance region, the light blocking layer is not provided in the avoidance region, and the field of view region is correspondingly provided within the avoidance region.

20. A vehicle comprising the windshield assembly according to claim 18 or 19.
